# EUROPEAN PATENT APPLICATION

(11) **EP 4 733 165 A1**
(43) Date of publication of application: **29.04.2026**
(21) Application number: 25201216.6
(22) Date of filing: 09.09.2025
(51) Int. Cl.: B60W 40/06, B60W 40/064, B60W 40/068, B60W 50/14

(54) **ROAD SURFACE FREEZING DETERMINATION DEVICE AND CONTROL SYSTEM FOR VEHICLE**

(30) Priority: 25.10.2024 JP 2024188195
(71) Applicant: Suzuki Motor Corporation, Shizuoka 432-8611 (JP)
(72) Inventor: AOSHIMA, Hidemichi, Hamamatsu-shi, 432-8611 (JP)
(74) Representative: Haseltine Lake Kempner LLP

(57) **Abstract**

[Problem to be Solved] To provide a road surface freezing determination device that can accurately determine whether a road surface is icy and a control system for a vehicle.

[Solution] A road surface freezing determination device 20 includes a pattern recognition part 22 configured to recognize a display pattern P representing an icy road surface warning projected by another vehicle 2 on a road surface in a region ahead of a vehicle 1 and a freezing determination part 21 configured to determine whether a road surface of a road on which the vehicle 1 travels is icy based on the display pattern P recognized by the pattern recognition part 22. A control system 10 for the vehicle 1 includes the road surface freezing determination device 20 and a driving assistance device 30 configured to execute a driving assistance function of the vehicle 1, and the driving assistance device 30 is configured to adjust the driving assistance function 30 in a case in which it is determined by the road surface freezing determination device 20 that the road surface is icy.

## Description

### [Technical Field]

The present invention relates to a road surface freezing determination device and a control system for a vehicle, the control system including the road surface freezing determination device.

### [Background Art]

Conventionally, devices are known which are configured to determine whether a road surface is icy, and to inform a passenger of a vehicle when it is likely that the road surface is icy. Patent Literature 1, for example, discloses a device that determines that there may be a risk that a road surface is frozen over when an external air temperature sensed by an external air temperature sensor is less than 3°C. The device described in Patent Literature 1 is configured to illuminate a road surface below a front side door in blue when the external air temperature is more than or equal to 3°C and to illuminate the road surface in red when the external air temperature is less than 3°C so as to have a passenger recognize a likelihood of icy road surface.

### [Citation List]

### [Patent Literature]

[Patent Literature 1] JP 2011-016383 A

### [Summary of Invention]

### [Problem to be Solved by the Invention]

The device of Patent Literature 1 described above determines the likelihood of icy road surface by determining whether the external air temperature is less than 3°C. A road surface temperature is less than the external air temperature in the winter and the like, and in a case in which the external air temperature is about 3°C, it can be determined that the road surface temperature is about 0°C and that there is a likelihood that the road surface is frozen over. However, the condition of road surface varies every moment, and thus, it is difficult to accurately determine whether the road surface is actually frozen over through freezing determination merely based on the external air temperature even if the likelihood of freezing may be determined.

The present invention has been made in view of circumstances as described above and has an object to provide a road surface freezing determination device that can accurately determine whether a road surface is frozen over and a control system for a vehicle, the control system including the road surface freezing determination device.

### [Means for Solving the Problem]

According to an aspect of the present invention, a road surface freezing determination device includes a pattern recognition part configured to recognize a display pattern representing an icy road surface warning projected by another vehicle on a road surface in a region ahead of a vehicle, and a freezing determination part configured to determine whether a road surface of a road on which the vehicle travels is icy based on the display pattern recognized by the pattern recognition part.

According to an aspect of the present invention, a control system for a vehicle includes the road surface freezing determination device, and a driving assistance device configured to execute a driving assistance function of the vehicle. The driving assistance device is configured to adjust the driving assistance function in a case in which it is determined by the road surface freezing determination device that the road surface is icy.

### [Advantageous Effect of Invention]

The road surface freezing determination device and the control system for a vehicle according to the present invention can accurately determine a frozen state of a road surface.

### [Brief Description of Drawings]

[Figure 1] Figure 1 is a block diagram showing a schematic configuration of a control system for a vehicle in a first embodiment of the present invention.
[Figure 2] Figure 2 is an illustration showing a state in which a display pattern representing an icy road surface warning is projected on a road surface.
[Figure 3] Figure 3 is a flowchart showing a flow of road surface freezing determination processing in the first embodiment.
[Figure 4] Figure 4 is a block diagram showing a schematic configuration of a control system for a vehicle in a second embodiment of the present invention.

### [Mode for Carrying Out the Invention]

### First Embodiment

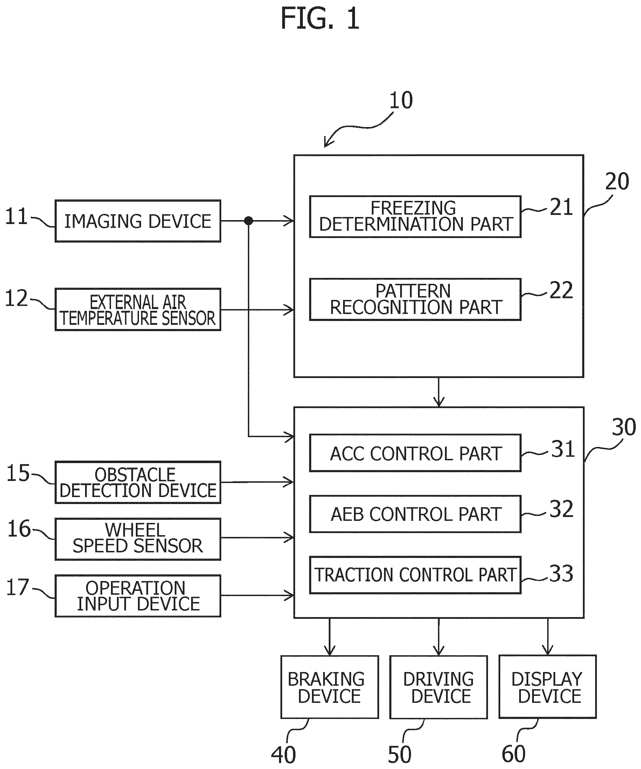

Hereinafter, a road surface freezing determination device and a control system for a vehicle according to a first embodiment of the present invention will be described in detail with reference to the drawings. Figure 1 is a block diagram showing a schematic configuration of a control system for a vehicle, the control system including a road surface freezing determination device in the present embodiment. A control system 10 for a vehicle in the present embodiment includes a road surface freezing determination device 20 and a driving assistance device 30. The control system 10 for a vehicle has a road surface freezing determination function and a driving assistance function and is configured to execute the driving assistance function based on a determination result obtained by the road surface freezing determination function. First, a configuration related to the road surface freezing determination function of the control system 10 for a vehicle will be described.

As shown in Figure 1, the control system 10 for a vehicle includes an imaging device 11 that images a region ahead of a vehicle, an external air temperature sensor 12, the road surface freezing determination device 20, and the like in relation to the road surface freezing determination function.

The imaging device 11 is configured to image the region ahead of the vehicle and to sense a surrounding environment including a state of a road surface of a road on which the vehicle runs. The imaging device 11 has a camera having an imaging element such as a CCD or a CMOS and is configured to output information about the region ahead of the vehicle as a still image and/or a moving image. The region ahead of the vehicle imaged by the camera is a region also including an adjacent lane on which another vehicle runs in addition to a lane (vehicle's own lane) ahead of the vehicle. The imaging device 11 is capable of sensing a location of a demarcation line on a road, the demarcation line defining the lane on which the vehicle is travelling from the adjacent lane, as well as the presence of and relative distances to, obstacles such as other vehicles and pedestrians present around the vehicle.

The external air temperature sensor 12 is configured to sense an external air temperature around the vehicle. The imaging device 11 and the external air temperature sensor 12 function as a sensing device that senses an environment surrounding the vehicle. Information about the environment surrounding the vehicle acquired by the imaging device 11 and the external air temperature sensor 12 is input to the road surface freezing determination device 20.

The road surface freezing determination device 20 is configured with a computer including a ROM that stores a program, data, and the like, a CPU that performs arithmetic processing, a RAM that stores dynamic data and results of the arithmetic processing, an input/output interface, and the like, for example. The road surface freezing determination device 20 is configured to determine whether a road surface of a road on which the vehicle is travelling is frozen over, or is covered in ice, or is icy based on the environment surrounding the vehicle detected by the imaging device 11 and the external air temperature sensor 12. The road surface freezing determination device 20 is configured to execute functions of a freezing determination part 21 and a pattern recognition part 22, for example.

The freezing determination part 21 computes a degree of freezing F of the road surface based on the environment surrounding the vehicle and compares the degree of freezing F with a determination threshold value Fth to determine whether or not the road surface is icy. The freezing determination part 21 performs predetermined image processing on image data about the region ahead of the vehicle, input from the imaging device 11, for example, to compute a degree of matching between a template image of a frozen road surface and the image data about the region ahead of the vehicle. The freezing determination part 21 takes into consideration the external air temperature around the vehicle detected by the external air temperature sensor 12, reflectance of infrared light at the road surface, and the like, for example, in addition to the degree of matching, so as to comprehensively compute the degree of freezing F of the road surface. As the degree of freezing F is greater, it represents that the road surface is highly likely to be frozen over.

The freezing determination part 21 compares the computed degree of freezing F with the determination threshold value Fth set in advance, and in a case in which the degree of freezing F is greater than or equal to the determination threshold value Fth, determines that the road surface of the road on which the vehicle is travelling is icy. Note that the freezing determination part 21 does not sense that the road surface is actually covered in ice, but estimates that the road surface is icy in the case in which the degree of freezing F is greater than or equal to the determination threshold value Fth.

As described, the freezing determination part 21 is configured to determine whether or not the road surface is icy based on the information about the surrounding environment acquired by the vehicle, such as the image data about the region ahead of the vehicle and the external air temperature. However, it takes time to correctly determine the presence/absence of icy road by the image processing because the image of the frozen road surface has few feature amounts such as an edge. In addition, it is difficult to accurately determine the presence/absence of icy road based on the information about the surrounding environment acquired only by the vehicle since the state of the road surface varies from time to time.

In the meanwhile, a driving assistance projection of projecting a warning on a road surface using an adaptive front lighting system included in a vehicle has been proposed in order to assist a driving operation of a driver. The driving assistance projection is a function of projecting a particular warning for assisting the driving operation of a driver, such as a display pattern representing an icy road surface warning, on the road surface as the driving assistance projection. The vehicle equipped with the driving assistance projection function can alert the driver by projecting the display pattern representing the icy road surface warning on the road surface ahead of the vehicle in the case in which the road surface on which the vehicle is travelling is icy.

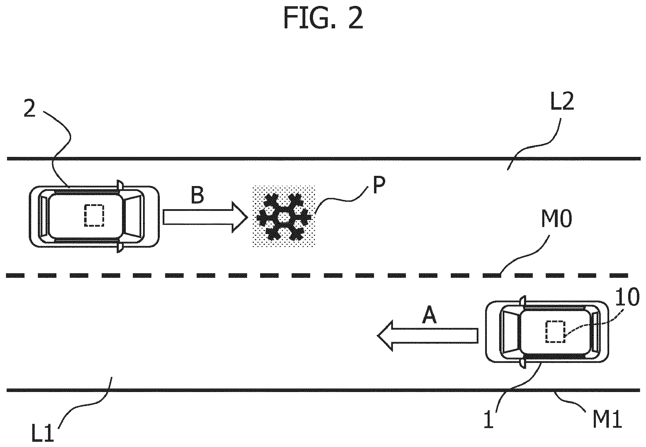

Figure 2 shows an example of a state in which the display pattern representing the icy road surface warning is projected on the road surface. In Figure 2, the vehicle 1 to which the control system 10 for a vehicle according to the present embodiment is applied is travelling on a lane (vehicle's own lane) L1. Another vehicle 2 is present on an adjacent lane L2 adjacent to the lane L1. The other vehicle 2 is an oncoming vehicle traveling in an opposite direction B to a traveling direction A of the vehicle 1. The lane L1 and the adjacent lane L2 are separated by a demarcation line M0, and the lane L1 is defined by the demarcation line M0 and a demarcation line M1 on a lateral end.

A display pattern P representing the icy road surface warning is projected on a road surface ahead of the other vehicle 2. The other vehicle 2 determines the presence/absence of freezing of the road surface based on information acquired by itself, and in a case of determining that the road surface is icy, projects the display pattern P. The other vehicle 2 might have determined the presence/absence of freezing of the road surface based on information that the vehicle 1 does not have, such as information obtained by road-to-vehicle communication or vehicle-to-vehicle communication, in addition to the image data.

Thus, in the present embodiment, in a case in which the other vehicle 2 travelling on the adjacent lane L2 has the driving assistance projection function and in which the display pattern P of the driving assistance projection is projected on the road surface ahead of the other vehicle 2, the road surface freezing determination for the vehicle 1 is performed utilizing the display pattern P of the driving assistance projection projected by the other vehicle 2, in other words, information about the road surface freezing determination performed by the other vehicle 2.

Concretely, the pattern recognition part 22 of the road surface freezing determination device 20 is configured to recognize the display pattern P projected by the other vehicle 2 on the road surface in the region ahead of the vehicle 1. Concretely, the pattern recognition part 22 performs image processing based on the image data about the region ahead of the vehicle 1 input from the imaging device 11, and recognizes the display pattern P of the driving assistance projection projected on the road surface of the adjacent lane L2 on which the other vehicle 2 is travelling.

The pattern recognition part 22 determines whether an image equivalent to the display pattern of the driving assistance projection is included in the image data about the region ahead of the vehicle 1, and in a case in which the image equivalent to the display pattern is included, determines whether the image is equivalent to the icy road surface warning. The pattern recognition part 22 may determine whether or not the display pattern P projected on the road surface indicates the icy road surface warning utilizing pattern matching, for example. The display pattern P shown in Figure 2 is a symbol that can be utilized as the icy road surface warning and indicates that the road surface of the road on which the other vehicle 2 is travelling is icy or is likely to be icy.

The freezing determination part 21 changes the determination threshold value Fth for determining the presence/absence of icy road in a case in which the display pattern P indicating the icy road surface warning is recognized by the pattern recognition part 22. In other words, the freezing determination part 21 determines whether or not the road surface of the road on which the vehicle 1 is travelling is icy by using a different determination threshold value Fth depending on whether or not the display pattern P indicating the icy road surface warning has been projected by the other vehicle 2. The freezing determination part 21 sets the determination threshold value Fth at a first threshold value Fth1 in a case in which the display pattern P has not been recognized by the pattern recognition part 22, and sets the determination threshold value Fth at a second threshold value Fth2 in a case in which the display pattern P has been recognized. The second threshold value Fth2 is less than the first threshold value Fth1 (Fth1 > Fth2).

The first threshold value Fth1 is a reference determination threshold value to be used for performing the freezing determination in the freezing determination part 21. The freezing determination part 21 sets the first threshold value Fth1 and the second threshold value Fth2 in advance at appropriate values, respectively. In the case in which the display pattern P has not been recognized by the pattern recognition part 22, the freezing determination part 21 determines that the road surface is icy when the degree of freezing F described above is greater than or equal to the first threshold value Fth1. On the other hand, in the case in which the display pattern P has been recognized by the pattern recognition part 22, the freezing determination part 21 determines that the road surface is icy when the degree of freezing F is greater than or equal to the second threshold value Fth2.

In a case in which the other vehicle 2 projects the display pattern P upon determining that the road surface is icy even if the degree of freezing F computed by the vehicle 1 is less than the first threshold value Fth1, the freezing determination part 21 determines that the road surface is icy if the degree of freezing F is greater than or equal to the second threshold value Fth2. Accordingly, the freezing determination part 21 can accurately determine the presence/absence of freezing of the road surface utilizing information about the icy road surface obtained from the other vehicle 2 in addition to the information acquired by the vehicle 1 by itself. In addition, it can contribute to shortening of a determination time period when determining the presence/absence of icy road from the degree of freezing F based on the image data about the region ahead of the vehicle 1. For example, in a case in which the degree of freezing F is greater than or equal to the second threshold value Fth2 and in which it cannot be determined that the road surface is icy due to determination conditions such as a time taken for the image processing although there is a likelihood of road surface freezing to some degree, the determination of icy road surface can be performed in the vehicle 1 referring to a road surface freezing determination result obtained by the other vehicle 2.

It is not determined that the road surface is icy in a case in which the degree of freezing F based on the image data about the region ahead of the vehicle 1 is less than the second threshold value Fth2 even in a case in which the other vehicle 2 is erroneously projecting the display pattern P. Thus, a likelihood that it is erroneously determined by the vehicle 1 that the road surface is icy can be reduced.

Next, a configuration related to the driving assistance function of the control system 10 for the vehicle 1 will be described. As shown in Figure 1, the control system 10 for the vehicle 1 includes the imaging device 11 described above, an obstacle detection device 15, a wheel speed sensor 16, an operation input device 17, the driving assistance device 30, a braking device 40, a driving device 50, a display device 60, and the like in relation to the driving assistance function.

The obstacle detection device 15 is configured to detect obstacles (for example, a preceding vehicle) ahead of the vehicle 1 and to measure a relative distance (an inter-vehicular distance) between the vehicle and each obstacle. For example, a millimeter wave radar, a sonar sensor, LiDAR (Light Detection and Ranging), or the like can be utilized as the obstacle detection device 15. Measurement of the distance by the obstacle detection device 15 is dynamically executed in a predetermined measurement cycle. The imaging device 11 described above may be used as the obstacle detection device 15. Information about the obstacles detected by the obstacle detection device 15 is input to the driving assistance device 30.

The wheel speed sensor 16 is configured to sense a rotational speed of each wheel (not shown) provided for the vehicle 1. The rotational speed of each wheel detected by the wheel speed sensor 16 is input to the driving assistance device 30.

The operation input device 17 is configured to receive various operation inputs made by a passenger of the vehicle 1, such as a driver, to the driving assistance device 30. The operation input device 17 has an on/off switch for switching on/off of the driving assistance function executed by the driving assistance device 30, a setting switch for selecting user settings (a set vehicle speed, a set inter-vehicular distance) in ACC control which will be described later, a selection switch for selecting a mode of traction control which will be described later, and the like, for example. The operation input device 17 is configured as a steering switch disposed at a steering wheel (not shown), for example. The operation input device 17 may be configured as a touch panel integrated with a display of the display device 60 which will be described later, for example. In addition, it may be configured such that a plurality of functions is allocated to one switch.

The driving assistance device 30 is configured with a computer including a ROM that stores a program, data, and the like, a CPU that performs arithmetic processing, a RAM that stores dynamic data and results of the arithmetic processing, an input/output interface, and the like, for example. The driving assistance device 30 includes an ACC control part 31, an AEB control part 32, a traction control part 33, and the like and is configured to execute ACC control, AEB control, and traction control as driving assistance functions. These driving assistance functions are known vehicle controls and will thus be described briefly below.

The ACC control part 31 is configured to perform constant speed driving in accordance with a set vehicle speed (target vehicle speed) in a case in which a preceding vehicle does not exist in a lane on which the vehicle 1 is travelling and to execute the ACC control of performing following travelling for maintaining the set inter-vehicular distance in a case in which a preceding vehicle exists. The ACC control part 31 executes the ACC control based on the image data about the region ahead of the vehicle 1 input from the imaging device 11, information about the obstacle (preceding vehicle) input from the obstacle detection device 15, and the like. The ACC control part 31 controls the braking device 40 and the driving device 50 so as to perform the constant speed driving or following travelling in accordance with the set vehicle speed and the set inter-vehicular distance input from the operation input device 17, for example. An acceleration/deceleration of the vehicle for achieving the set vehicle speed or the set inter-vehicular distance in the ACC control may be set at values set in advance or may be set by the driver through operation of the operation input device 17, for example.

The AEB control part 32 is configured to execute automatic brake control of activating an automatic brake, what is called autonomous emergency braking (AEB), by the braking device 40 in accordance with a probability of a collision between the vehicle 1 and an obstacle. The AEB control part 32 is configured to determine the probability of a collision between the vehicle 1 and the obstacle based on the information about the obstacle input from the obstacle detection device 15 and vehicle speed information input from the wheel speed sensor 16, for example. The AEB control part 32 calculates, as the probability of a collision, Time-To-Collision (TTC) required until the vehicle approaches and contacts an obstacle, for example, based on the relative distance between the vehicle 1 and the obstacle input from the obstacle detection device 15 and the vehicle speed obtained from a rotational speed of a wheel input from the wheel speed sensor 16, for example. The AEB control part 32 determines that the probability of a collision with the obstacle is high in a case in which the Time-To-Collision TTC is less than a threshold value set in advance, for example, and activates the automatic brake.

The traction control part 33 is configured to control the braking device 40 and the driving device 50 so as to adjust a braking force, a driving force, and the like of the vehicle 1 in order to prevent spinning (slipping) of wheels when the vehicle 1 starts and accelerates. The traction control part 33 calculates a slipping amount S of the wheel that is slipping based on the rotational speed of each wheel detected by the wheel speed sensor 16. In a case in which the calculated slipping amount S of the wheel exceeds a start threshold value Sth, the traction control part 33 executes the traction control to reduce over-revolution of the wheel by reduction of torque of the driving device 50 and/or activation of the braking device 40 in the vehicle 1.

The braking device 40 is a brake that generates a braking force in accordance with a pressing amount of a brake pedal (not shown) pressed by the driver, and includes a brake controller and a brake actuator for generating a braking force in accordance with a braking command of the vehicle system or the driving assistance device 30.

The driving device 50 is configured to generate a driving force for causing the vehicle to move, and includes an engine controller (not shown) that controls the driving force in accordance with the pressing amount of an accelerator pedal (not shown) pressed by the driver or in accordance with a control command from the driving assistance device 30. Note that an internal combustion engine, a motor, or the like, for example, can be used as the driving device 50 of the vehicle.

The display device 60 is configured to perform display in accordance with a command from the driving assistance device 30 to provide information for a passenger in the vehicle. The display device 60 has a liquid crystal display, a display light, and the like arranged on an instrument panel at a front part of the vehicle, for example, and presents visual information for the passenger. The display device 60 may be configured as a display of a navigation system not shown, for example. Means for providing information may be configured to provide information for the passenger through hearing utilizing a speaker or the like, for example, in addition to the display device 60 or instead of the display device 60. The display device 60 performs display for providing information for the passenger during execution of the ACC control, the AEB control, or the traction control described above, for example.

The control system 10 for a vehicle in the present embodiment includes the road surface freezing determination device 20 and the driving assistance device 30 described above and is configured to adjust the driving assistance function executed by the driving assistance device 30 when it is determined by the road surface freezing determination device 20 that the road surface of the road on which the vehicle 1 is travelling is icy. Hereinafter, adjustment of each control executed as the driving assistance function will be described.

### (1) ACC control

In a case in which it is determined by the road surface freezing determination device 20 that the road surface of the road on which the vehicle 1 travels is icy, the ACC control part 31 increases the set inter-vehicular distance as compared with a case in which the road surface is not icy. When the road surface is not icy, the ACC control part 31 uses the set inter-vehicular distance input from the operation input device 17 as it is, and when it is determined that the road surface is icy, the ACC control part 31 increases the set inter-vehicular distance input from the operation input device 17. The ACC control part 31 may increase the set inter-vehicular distance by adding a predetermined value to the set inter-vehicular distance input from the operation input device 17 or multiplying the set inter-vehicular distance by a coefficient (> 1). Accordingly, in the case in which the road surface is icy, the vehicle 1 follows a preceding vehicle while maintaining an inter-vehicular distance greater than in the case in which the road surface is not icy.

In the case in which it is determined by the road surface freezing determination device 20 that the road surface on which the vehicle 1 travels is icy, the ACC control part 31 also lowers the acceleration/deceleration for executing the ACC control as compared with the case in which the road surface is not icy. Accordingly, in the case in which the road surface is icy, the change in speed of the vehicle 1 for achieving the set vehicle speed or the set inter-vehicular distance in the ACC control is slower than in the case in which the road surface is not icy. As described, in the case in which it is determined by the road surface freezing determination device 20 that the road surface on which the vehicle 1 travels is icy, the content of the ACC control is adjusted to a safer side. Note that, in the case in which it is determined by the road surface freezing determination device 20 that the road surface on which the vehicle 1 travels is icy, the ACC control part 31 may change either one or both of the set inter-vehicular distance and the acceleration/deceleration in the ACC control.

### (2) AEB control

In the case in which it is determined by the road surface freezing determination device 20 that the road surface is icy, the AEB control part 32 brings forward the timing for starting operation of the automatic brake as compared with the case in which the road surface is not icy. In the case in which it is determined that the road surface is icy, the AEB control part 32 increases a threshold value of the Time-To-Collision TTC for determining the start of operation of the automatic brake, for example, as compared with the case in which the road surface is not icy. Accordingly, in the case in which the road surface is icy, the AEB control is started at a timing earlier than in the case in which the road surface is not icy. As described, in the case in which it is determined by the road surface freezing determination device 20 that the road surface on which the vehicle 1 travels is icy, the content of the AEB control is changed to the safer side.

### (3) Traction Control

In the case in which it is determined by the road surface freezing determination device 20 that the road surface is icy, the traction control part 33 decreases a start threshold value Sth for determining the start of operation of the traction control as compared with the case in which the road surface is not icy. Accordingly, in the case in which the road surface is icy, the traction control is started in a stage in which the slipping amount of a wheel is smaller than in the case in which the road surface is not icy.

The traction control part 33 may change a control mode in accordance with the presence/absence of the icy road surface instead of changing the start threshold value Sth. Hereinafter, changing of the control mode in the traction control in accordance with the presence/absence of the icy road surface will be described. The traction control part 33 has a first mode, a second mode, and a third mode as control modes corresponding to travelling modes of the vehicle 1. The traction control part 33 is configured to execute the traction control in any of the first mode, the second mode, and the third mode selected in accordance with a driver's operation on the operation input device 17.

The first mode corresponds to a standard travelling mode, that may be called a normal mode, and the start threshold value Sth of the slipping amount S is set at a first start threshold value Sth1 serving as a reference. Content of the traction control (such as a torque reduction amount at the driving device 50 and a brake force of the braking device 40, for example) is set at an initial state.

The second mode corresponds to a travelling mode, that may be called a snow mode, and is suitable for travelling on a slippery road surface of a snowy road or the like. In the second mode, the start threshold value Sth of the slipping amount S is set at a second start threshold value Sth2 less than the first start threshold value Sth1 in the first mode. Accordingly, in the second mode, operation of the traction control is started at a timing earlier than in the first mode. Note that the content of the traction control in the second mode is similar to that of the first mode. The traction control in the second mode is designed so as to stabilize a vehicle behavior by reducing slipping of a wheel in a slippery road surface condition such as a snowy road.

The third mode corresponds to a travelling mode, that may be called a lock mode, and is suitable for escaping from a situation in which control on a wheel has been lost due to sludge, a sandy area, a snowy road, or the like so that the vehicle is unable to move and gets stuck. In the third mode, the start threshold value Sth of the slipping amount S is set at a third start threshold value Sth3 greater than the first start threshold value Sth1 in the first mode (Sth3 > Sth1 > Sth2). Accordingly, in the third mode, the timing for starting operation of the traction control is later than in the first mode. In addition, the brake force of the braking device 40 applied to a slipping wheel in the third mode is set to be greater than brake forces applied to a slipping wheel in the first mode and the second mode. The traction control in the third mode is designed so as to brake a slipping one of the driving wheels to ensure a driving torque of the other of the driving wheels and to assist the vehicle 1 with emergency escape from the stuck situation.

When it is determined by the road surface freezing determination device 20 that the road surface is icy in a state in which the first mode has been selected by a driver's operation on the operation input device 17, the traction control part 33 switches the control mode to the second mode suitable for travelling on a slippery road surface of a snowy road or the like. When it is determined by the road surface freezing determination device 20 that the road surface is icy in a state in which the second mode has been selected by a driver's operation on the operation input device 17, the traction control part 33 executes the traction control while maintaining the second mode.

On the other hand, when it is determined by the road surface freezing determination device 20 that the road surface is icy in a state in which the third mode has been selected by a driver's operation on the operation input device 17, the traction control part 33 maintains the third mode. As described, in the state in which the driver has selected the third mode of giving priority to escape from the stuck situation, the driver's intention is respected even in the case in which it is determined that the road surface is icy, and the traction control by the third mode is continued.

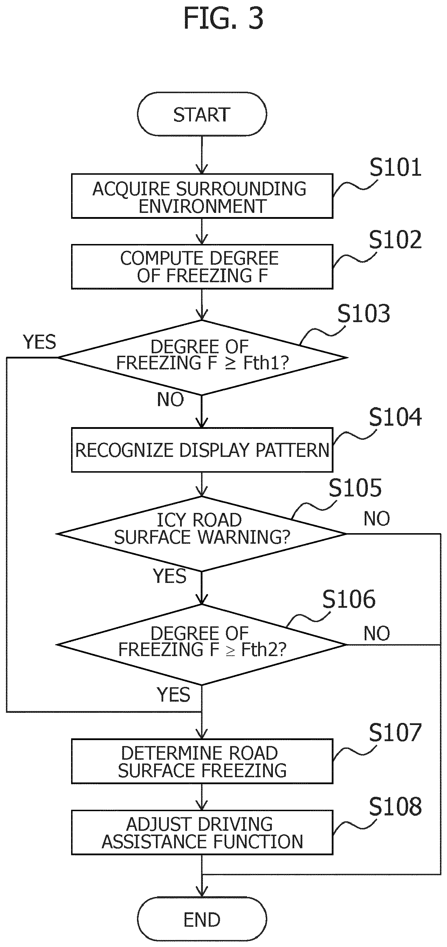

Hereinafter, road surface freezing determination processing in the present embodiment will be described in detail using a flowchart of Figure 3. Figure 3 shows an example of a flow of the road surface freezing determination processing. The road surface freezing determination device 20 repeatedly executes the processing shown in Figure 3 in a predetermined cycle.

In step S101, the road surface freezing determination device 20 acquires information about the environment surrounding the vehicle detected by the imaging device 11 and the external air temperature sensor 12. In other words, the road surface freezing determination device 20 acquires, as surrounding environment information, image data including a road surface of the lane L1 in the region ahead of the vehicle 1 and the adjacent lane L2 imaged by the imaging device 11 and the external air temperature sensed by the external air temperature sensor 12.

In step S102, the freezing determination part 21 computes the degree of freezing F of the road surface based on the environment surrounding the vehicle acquired in step S101. In step S103, the freezing determination part 21 determines whether or not the degree of freezing F computed in step S102 is greater than or equal to the first threshold value Fth1. In a case in which the degree of freezing F is greater than or equal to the first threshold value Fth1 (F ≥ Fth1), the processing proceeds to step S107, and it is determined that the road surface of the road on which the vehicle 1 is travelling is icy. On the other hand, in a case in which the degree of freezing F is less than the first threshold value Fth1 (F < Fth1), the processing proceeds to step S104.

In step S104, the pattern recognition part 22 performs image processing on the image data acquired in step S101 and recognizes the display pattern P projected on the road surface ahead of the other vehicle 2 travelling in the adjacent lane L2. In step S105, it is determined whether or not the recognized display pattern P represents the icy road surface warning. When it is determined that the display pattern P represents the icy road surface warning, the processing proceeds to step S106. When it is determined that the display pattern P does not represent the icy road surface warning, it is determined that the road surface is not icy, and this processing is terminated.

In step S106, the freezing determination part 21 determines whether or not the degree of freezing F computed in step S102 is greater than or equal to the second threshold value Fth2 that is less than the first threshold value Fth1. In a case in which the degree of freezing F is greater than or equal to the second threshold value Fth2 (F ≥ Fth2), the processing proceeds to step S107, and it is determined that the road surface of the road on which the vehicle 1 is travelling is icy. On the other hand, in a case in which the degree of freezing F is less than the second threshold value Fth2 (F < Fth2), it is determined that the road surface is not icy, and this processing is terminated.

When it is determined that the road surface is icy in step S107, the road surface freezing determination device 20 transmits information about the icy road surface to the driving assistance device 30 in step S108. Upon receipt of the information about the icy road surface, the driving assistance device 30 adjusts the driving assistance function as described above. Accordingly, in the case in which the road surface of the road on which the vehicle 1 travels is icy, the driving assistance function is executed with the control content adjusted to the safer side or the control content in which a driver's intention is respected. Note that the driving assistance device 30 may control the display device 60 so as to notify the passenger of execution of the driving assistance function in a state in which the vehicle 1 is travelling on a frozen road surface.

In the control system 10 for a vehicle according to the first embodiment described above, the operational effects can be achieved as described below.
(1) The road surface freezing determination device 20 includes the pattern recognition part 22 configured to recognize the display pattern P representing the icy road surface warning projected by the other vehicle 2 on the road surface in the region ahead of the vehicle 1 and the freezing determination part 21 configured to determine whether or not the road surface of the road on which the vehicle 1 travels is icy based on the display pattern P recognized by the pattern recognition part 22. The accuracy of the road surface freezing determination performed by the vehicle 1 can be improved by determining whether the road surface of the road on which the vehicle 1 is travelling is icy utilizing the display pattern P representing the icy road surface warning projected by the other vehicle 2. In other words, reliability of the road surface freezing determination of the vehicle 1 can be improved utilizing the road surface freezing determination result obtained by the other vehicle 2.
(2) The freezing determination part 21 is configured to compute the degree of freezing F of the road surface based on the environment surrounding the vehicle 1, and in the case in which the degree of freezing F is greater than or equal to the determination threshold value Fth, to determine that the road surface is icy. The determination threshold value Fth is set at the first threshold value Fth1 in the case in which the display pattern P is not recognized by the pattern recognition part 22, and is set at the second threshold value Fth2 less than the first threshold value Fth1 in the case in which the display pattern P is recognized by the pattern recognition part 22. The freezing determination part 21 computes the degree of freezing F based on the information about the environment surrounding the vehicle 1, but the computed degree of freezing F may be unable to accurately reflect an actual state of the road surface in some cases due to factors such as a distance from the vehicle 1 to a frozen area on the road and illuminance surrounding the vehicle 1. In such a case, the road surface freezing determination result obtained by the other vehicle 2 present ahead of the vehicle 1 may be more accurate than a computation result obtained by the vehicle 1, and thus, reliability of the road surface freezing determination in the vehicle 1 can be improved by utilizing the road surface freezing determination result obtained by the other vehicle 2. Note that the display pattern P projected by the other vehicle 2 is utilized in a case in which the degree of freezing F is the second threshold value Fth2 and in which a likelihood of freezing is high to some extent. This can reduce a likelihood of erroneously determining that the road surface is icy in a case in which the degree of freezing F computed in the vehicle 1 is low and the other vehicle 2 erroneously projects the display pattern P.
(3) The freezing determination part 21 computes the degree of freezing F based on the image data about the region ahead of the vehicle, acquired from the imaging device 11 that images the region ahead of the vehicle 1. In the case in which it cannot be determined that the road surface is icy based only on the degree of freezing F due to determination conditions such as a time taken for the image processing, for example, the determination of road surface freezing can be performed in the vehicle 1 referring to the road surface freezing determination result obtained by the other vehicle 2.
(4) The control system 10 for the vehicle 1 includes the road surface freezing determination device 20 and the driving assistance device 30 configured to execute the driving assistance function of the vehicle 1. The driving assistance device 30 is configured to adjust the driving assistance function in the case in which it is determined by the road surface freezing determination device 20 that the road surface is icy. This enables the driving assistance function to be activated with control content suitable for the frozen road surface based on a highly accurate road surface freezing determination result obtained by the road surface freezing determination device 20.
(5) The driving assistance device 30 is configured to, as the driving assistance function, execute the ACC control of performing the constant speed driving in accordance with the set vehicle speed in the case in which a preceding vehicle is not present in the lane L1 on which the vehicle 1 travels and performing following travelling in a case in which the preceding vehicle is present. In the case in which it is determined by the road surface freezing determination device 20 that the road surface is icy, the driving assistance device 30 lowers the acceleration/deceleration when executing the ACC control or increases the set inter-vehicular distance in the ACC control as compared with the case in which the road surface is not icy. Accordingly, the control content of the ACC control is adjusted to the safer side in the case in which it is determined that the road surface is icy. Concretely, the inter-vehicular distance between the vehicle 1 and the preceding vehicle is increased in the following travelling. In addition, the speed of the vehicle 1 is changed gradually when achieving the set vehicle speed or the set inter-vehicular distance.
(6) The driving assistance device 30 is configured to execute, as the driving assistance function, the autonomous emergency braking control of activating the automatic brake in accordance with a probability of a collision between the vehicle 1 and an obstacle. In the case in which it is determined by the road surface freezing determination device 20 that the road surface is icy, the driving assistance device 30 brings forward the timing for starting operation of the automatic brake as compared with the case in which the road surface is not icy. Accordingly, in the case in which it is determined that the road surface is icy and in which it is estimated that a road surface friction coefficient is low, an effect of mitigating a collision damage can be increased by activating the autonomous emergency braking control at an earlier timing.
(7) The driving assistance device 30 is configured to execute, as the driving assistance function, the traction control of reducing over-revolution of a wheel by reduction of torque of the driving device 50 and/or activation of the braking device 40 of the vehicle 1 in a case in which the slipping amount S of the wheel of the vehicle 1 exceeds the start threshold value Sth set in advance. In the case in which it is determined by the road surface freezing determination device 20 that the road surface is icy, the driving assistance device 30 decreases the start threshold value Sth as compared with the case in which the road surface is not icy. Accordingly, the traction control is started with a smaller slipping amount S in the case in which it is determined that the road surface is icy. This can reduce slipping of the wheel to stabilize a behavior of the vehicle.
(8) The traction control includes the first mode in which the start threshold value Sth is set at the first start threshold value Sth1 serving as the reference, the second mode in which the start threshold value Sth is set at the second start threshold value Sth2 less than the first start threshold value Sth1, and the third mode in which the start threshold value Sth is set at the third start threshold value Sth3 greater than the first start threshold value Sth1. The brake force of the braking device 40 applied to a slipping wheel in the third mode is set to be greater than the brake force applied to a slipping wheel in the first mode and the second mode. The traction control part 33 of the driving assistance device 30 is configured to execute the traction control in one of the first mode, the second mode, and the third mode selected in accordance with a switch operation performed by the driver. When it is determined by the road surface freezing determination device 20 that the road surface is icy in the state in which the first mode is selected, the traction control part 33 performs a switch to the second mode, and when it is determined by the road surface freezing determination device 20 that the road surface is icy in the state in which the third mode is selected, the traction control part 33 maintains the third mode. The mode is automatically switched to the second mode, in the case in which it is determined that the road surface is icy, to start the traction control at an earlier timing. On the other hand, in the case in which the third mode is selected by the driver, the driver's intention is respected to maintain the third mode and to execute the traction control. Accordingly, by braking a slipping one of the driving wheels, a driving torque of the other of the driving wheels is ensured, so that the vehicle 1 can be assisted with emergency escape from the stuck situation.

### Second Embodiment

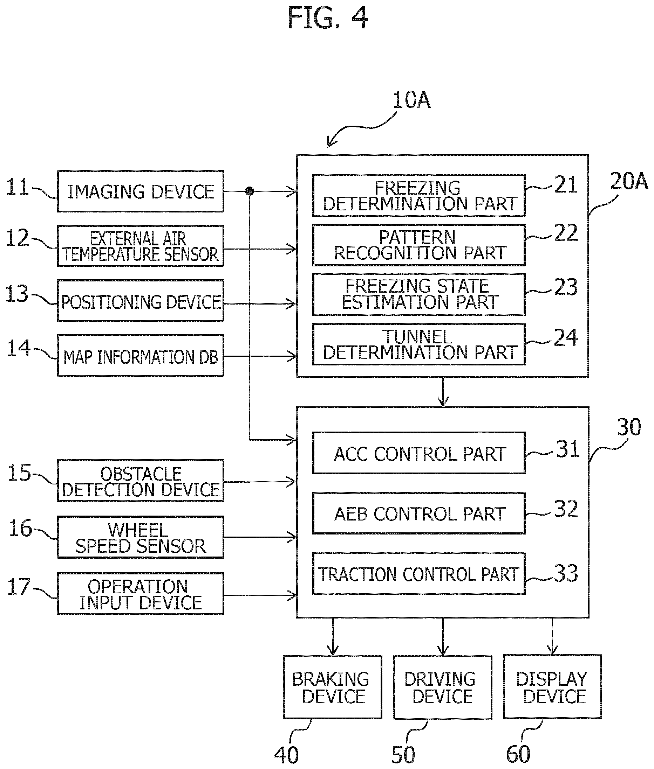

Hereinafter, a control system for a vehicle according to a second embodiment of the present invention will be described. A basic configuration of the control system for a vehicle according to the second embodiment is similar to that of the control system 10 for a vehicle according to the first embodiment described above. Hereinafter, differences from the first embodiment will be mainly described. Figure 4 is a block diagram showing a schematic configuration of a control system 10A for a vehicle in the present embodiment.

As shown in Figure 4, the control system 10A for a vehicle further includes a positioning device 13 that acquires location information about the vehicle 1 and a map information database 14.

The positioning device 13 is configured to acquire location information about the vehicle 1 based on information from a Global Navigation Satellite System (GNSS) or the like, for example. The map information database 14 is a storage device that stores map information such as a three-dimensional high-precision map, for example. Information related to a road shape such as a curvature and the number of lanes, for example, is saved in the map information database 14 in association with position information on the road. The road information saved in the map information database 14 also includes information about a tunnel existing on the road. Current location information acquired by the positioning device 13 and the map information in the map information database 14 are input to a road surface freezing determination device 20A.

The road surface freezing determination device 20A is configured to execute a function of a freezing state estimation part 23 in addition to the freezing determination part 21 and the pattern recognition part 22. The road surface freezing determination device 20A may further be optionally configured to execute a function of a tunnel determination part 24.

The freezing state estimation part 23 is configured to estimate a frozen state of a front portion of a radar sensor provided for the vehicle 1. Here, the radar sensor is a sensor such as the millimeter wave radar constituting the obstacle detection device 15 described above, and is configured to emit an electric wave (electromagnetic wave or light) to an object and receive a reflected wave from the object to measure a distance to the object, and the like. The radar sensor is attached to the front part of the vehicle 1 for sensing the region ahead of the vehicle 1, and the front portion of the radar sensor is covered by a radar cover or a housing or the like.

Sensing results obtained by the radar sensor is utilized in the driving assistance function executed by the driving assistance device 30 as described above. However, in a case in which the front portion of the radar sensor is in the frozen state, diffused reflection occurs, so that correct sensing by the radar sensor cannot be performed. Here, the case in which the front portion of the radar sensor is in the frozen state includes a state in which the front portion of the radar sensor is frozen over, and a state in which ice, snow, or the like covers the front portion of the radar sensor, for example. The driving assistance device 30 is configured to stop operation of the driving assistance function in the case in which it is determined that the front portion of the radar sensor is in the frozen state so that the driving assistance function cannot be performed normally.

Whether or not the front portion of the radar sensor is in the frozen state is usually determined based on a relationship between the external air temperature of the vehicle 1 and irregularity in the reflected waves received by the radar sensor. However, the irregularity in the reflected waves in the radar sensor is caused not only by the frozen state of the front portion of the radar sensor but also by another factor such as a fact that the vehicle 1 is travelling in a tunnel, for example. Operation of the driving assistance function is affected depending on whether or not the front portion of the radar sensor is in the frozen state. Thus, it is desired to accurately determine the frozen state of the front portion of the radar sensor.

Thus, in the present embodiment, estimation of the frozen state of the radar sensor is performed by the freezing state estimation part 23 utilizing the display pattern P of the driving assistance projection projected by the other vehicle 2, in other words, information about the road surface freezing determination performed by the other vehicle 2. In a case in which the display pattern P indicating the icy road surface warning is recognized by the pattern recognition part 22, for example, the freezing state estimation part 23 estimates that the front portion of the radar sensor is in the frozen state. Alternatively, in the case in which the display pattern P indicating the icy road surface warning is recognized by the pattern recognition part 22, the freezing state estimation part 23 may change a threshold value for determining the frozen state based on the relationship between the external air temperature of the vehicle 1 and the irregularity in the reflected waves in the radar sensor as described above. By changing the threshold value in the case in which the display pattern P is recognized, the front portion of the radar sensor is more easily determined to be in the frozen state as compared with the case in which the display pattern P is not recognized.

When it is estimated by the freezing state estimation part 23 that the front portion of the radar sensor is in the frozen state, the driving assistance device 30 stops operation of the driving assistance function.

The tunnel determination part 24 is configured to determine whether or not the vehicle 1 is travelling in a tunnel based on current location information about the vehicle 1 input from the positioning device 13 and the map information input from the map information database 14. The driving assistance device 30 may be configured to stop operation of the driving assistance function in a case in which it is determined by the tunnel determination part 24 that the vehicle 1 is travelling in the tunnel and it is also estimated by the freezing state estimation part 23 that the front portion of the radar sensor is in the frozen state.

In the control system 10A for a vehicle according to the second embodiment described above, the operational effects can be achieved as described below, in addition to the operational effects according to the first embodiment described above. (1) The road surface freezing determination device 20A further includes the freezing state estimation part 23 that estimates the frozen state of the front portion of the radar sensor (the obstacle detection device 15) provided in the vehicle 1 based on the display pattern P recognized by the pattern recognition part 22. When it is estimated by the freezing state estimation part 23 that the front portion of the radar sensor is in the frozen state, the driving assistance device 30 stops operation of the driving assistance function. Accordingly, operation of the driving assistance function can be stopped only in a case in which it can be objectively estimated that the front portion of the radar sensor is frozen over based on the road surface freezing determination result obtained by the other vehicle 2.

(2) The road surface freezing determination device 20 further includes the tunnel determination part 24 that determines whether or not the vehicle 1 is travelling in a tunnel. In the case in which it is determined by the tunnel determination part 24 that the vehicle 1 is travelling in the tunnel and in which it is estimated by the freezing state estimation part 23 that the front portion of the radar sensor is in the frozen state, the driving assistance device 30 stops operation of the driving assistance function. Due to occurrence of diffused reflection in the tunnel, it is difficult to correctly estimate the frozen state of the front portion of the radar sensor based on the irregularity in the reflected waves received by the radar sensor. Utilization of the road surface freezing determination result obtained by the other vehicle 2 can improve reliability of the frozen state of the front portion of the radar sensor, and operation of the driving assistance function can be stopped only in the case in which it can be objectively estimated that the front portion of the radar sensor is frozen over.

### Modified Examples

(1) In the embodiments described above, the freezing determination part 21 is configured to be capable of determining by itself whether or not the road surface is icy by computing the degree of freezing F for comparison with the determination threshold value Fth. However, without being limited thereto, the freezing determination part 21 may be configured to determine whether or not the road surface of the road on which the vehicle 1 is travelling is icy only based on the display pattern P projected by the other vehicle 2 without computing the degree of freezing F. In this case, the freezing determination part 21 determines that the road on which the vehicle 1 is travelling is icy in the case in which the display pattern P representing the icy road surface warning is projected by the other vehicle 2.
(2) In the embodiments described above, the freezing determination part 21 determines whether or not the road surface is icy using a different determination threshold value Fth depending on whether the display pattern P is projected by the other vehicle 2. However, without being limited thereto, it may be configured to correct the degree of freezing F depending on whether or not the display pattern P is projected by the other vehicle 2. For example, in the case in which the display pattern P is projected by the other vehicle 2, the degree of freezing F is corrected to increase so as to facilitate determination by the freezing determination part 21 that the road surface is icy.
(3) In the embodiments described above, the road surface freezing determination result obtained by the road surface freezing determination device 20 is utilized for adjusting the driving assistance function including the ACC control, the AEB control, and the traction control executed by the driving assistance device 30. However, it may be configured such that the road surface freezing determination result obtained by the road surface freezing determination device 20 may be used to adjust control content of other vehicle controls. In addition, the driving assistance device 30 is not required to include all of the ACC control part 31, the AEB control part 32, and the traction control part 33. The driving assistance device 30 may be configured to execute at least any of the ACC control, the AEB control, and the traction control.
(4) In the second embodiment described above, it has been described that the road surface freezing determination device 20A includes the freezing state estimation part 23 and the tunnel determination part 24. However, without being limited thereto, the freezing state estimation part 23 and the tunnel determination part 24 may each be configured as a unit separate from the road surface freezing determination device 20A.

Although the embodiments of the present invention have been described above, the present invention is not limited to the above-described embodiments, and it is added that various modifications and changes can further be made within the scope of the present invention.

### [Reference Signs List]

- 1: Vehicle
- 2: Another vehicle
- 10, 10A: Control system for vehicle
- 11: Imaging device
- 15: Obstacle detection device (Radar sensor)
- 20, 20A: Road surface freezing determination device
- 21: Freezing determination part
- 22: Pattern recognition part
- 23: Freezing state estimation part
- 24: Tunnel determination part
- 30: Driving assistance device
- 40: Braking device
- 50: Driving device

## Claims

1. A road surface freezing determination device comprising:
a pattern recognition part configured to recognize a display pattern representing an icy road surface warning projected by another vehicle on a road surface in a region ahead of a vehicle; and
a freezing determination part configured to determine whether a road surface of a road on which the vehicle travels is icy based on the display pattern recognized by the pattern recognition part.

2. The road surface freezing determination device according to claim 1, wherein:
the freezing determination part is configured to compute a degree of freezing of the road surface based on an environment surrounding the vehicle, and to determine that the road surface is icy in a case in which the degree of freezing is greater than or equal to a determination threshold value; and
the determination threshold value is set at a first threshold value in a case in which the display pattern is not recognized by the pattern recognition part, and is set at a second threshold value, less than the first threshold value, in a case in which the display pattern is recognized by the pattern recognition part.

3. A control system for a vehicle, the control system comprising:
the road surface freezing determination device according to claim 1 or 2; and
a driving assistance device configured to execute a driving assistance function of the vehicle, wherein
the driving assistance device is configured to adjust the driving assistance function in a case in which it is determined by the road surface freezing determination device that the road surface is icy.

4. The control system for a vehicle according to claim 3, wherein
the driving assistance device is configured to
execute, as the driving assistance function, ACC control of performing constant speed driving in accordance with a set vehicle speed in a case in which a preceding vehicle is not present in a lane on which the vehicle travels and of performing following travelling in a case in which the preceding vehicle is present, and
in the case in which it is determined by the road surface freezing determination device that the road surface is icy, lower an acceleration/deceleration when executing the ACC control, or increase a set inter-vehicular distance in the ACC control, as compared with a case in which the road surface is not icy.

5. The control system for a vehicle according to claim 3 or 4, wherein
the driving assistance device is configured to
execute, as the driving assistance function, autonomous emergency braking control of activating an automatic brake in accordance with a probability of a collision between the vehicle and an obstacle, and
in the case in which it is determined by the road surface freezing determination device that the road surface is icy, bring forward a timing for starting operation of the automatic brake as compared with a case in which the road surface is not icy.

6. The control system for a vehicle according to any one of claims 3 to 5, wherein
the driving assistance device is configured to
in a case in which a slipping amount of a wheel of the vehicle exceeds a start threshold value set in advance, execute, as the driving assistance function, traction control of reducing over-revolution of the wheel by reduction of torque of a driving device and/or activation of a braking device of the vehicle, and
in the case in which it is determined by the road surface freezing determination device that the road surface is icy, decrease the start threshold value as compared with a case in which the road surface is not icy.

7. The control system for a vehicle according to any one of claims 3 to 6, wherein:
the driving assistance device is configured to, in a case in which a slipping amount of a wheel of the vehicle exceeds a start threshold value set in advance, execute, as the driving assistance function, traction control of reducing over-revolution of the wheel by reduction of torque of a driving device and/or operation of a braking device of the vehicle;
the traction control includes a first mode in which the start threshold value is set at a first start threshold value serving as a reference, a second mode in which the start threshold value is set at a second start threshold value less than the first start threshold value, and a third mode in which the start threshold value is set at a third start threshold value greater than the first start threshold value, and a brake force of the braking device applied to a slipping wheel in the third mode is set to be greater than a brake force applied to the slipping wheel in the first mode and the second mode;
the driving assistance device is configured to execute the traction control in one of the first mode, the second mode, and the third mode selected by a switch operation performed by a driver; and
the driving assistance device
switches to the second mode when it is determined by the road surface freezing determination device that the road surface is icy in a state in which the first mode is selected, and
maintains the third mode when it is determined by the road surface freezing determination device that the road surface is icy in a state in which the third mode is selected.

8. The control system for a vehicle according to any one of claims 3 to 7, further comprising a freezing state estimation part configured to estimate a frozen state of a front portion of a radar sensor provided in the vehicle based on the display pattern recognized by the pattern recognition part, wherein
the driving assistance device stops operation of the driving assistance function when it is estimated by the freezing state estimation part that the front portion of the radar sensor is in the frozen state.

9. The control system for a vehicle according to claim 8, further comprising a tunnel determination part configured to determine whether the vehicle is travelling in a tunnel, wherein
the driving assistance device stops operation of the driving assistance function in a case in which it is determined by the tunnel determination part that the vehicle is travelling in the tunnel and in which it is estimated by the freezing state estimation part that the front portion of the radar sensor is in the frozen state.
